# EUROPÄISCHE PATENTSCHRIFT

(11) **EP 1 287 346 B1**
(45) Veröffentlichungstag und Bekanntmachung des Hinweises auf die Patenterteilung: **15.03.2006**
(21) Anmeldenummer: 01949258.6
(22) Anmeldetag: 08.06.2001
(51) Int. Cl.: G01N 27/333, G01N 33/487

(54) **MEMBRAN ZUR BEDECKUNG VON DETEKTIONSELEMENTEN PHYSIKO-CHEMISCHER UND BIOCHEMISCHER SIGNALWANDLER UND VERFAHREN ZUR HERSTELLUNG DER MEMBRAN**
MEMBRANE FOR COVERING DETECTION ELEMENTS OF PHYSICO-CHEMICAL AND BIOCHEMICAL SIGNAL CONVERTERS AND METHOD FOR PRODUCING SAID MEMBRANE
MEMBRANE POUR COUVRIR DES ELEMENTS DE DETECTION DE CONVERTISSEURS DE SIGNAUX PHYSICO-CHIMIQUES ET PROCEDE POUR PRODUIRE LADITE MEMBRANE

(30) Priorität: 09.06.2000 DE 10028724
(43) Veröffentlichungstag der Anmeldung: 05.03.2003
(73) Patentinhaber: BCS Bio- und Chemosensoren GmbH, 17489 Greifswald (DE)
(72) Erfinder: ABEL, Peter, 17495 Züssow (DE); VON WOEDTKE, Thomas, 18519 Horst (DE); SCHWOCK, Alexander, 18516 Griebenow (DE); SCHULZ, Birgit, 17498 Wackerow (DE)
(74) Vertreter: Neumann, Günter
(86) Internationale Anmeldenummer: PCT/DE2001/002185
(87) Internationale Veröffentlichungsnummer: WO 2001/094929

(56) Entgegenhaltungen:
- EP-A- 0 103 031
- DE-A- 19 547 923
- DE-C- 19 628 052

## Beschreibung

Die Erfindung betrifft eine Membran zur Bedeckung von Detektionselementen physiko-chemischer und biochemischer Signalwandler mit einem variabel gestaltbaren Permeations-Analyt-Fenster in einer für einen Analyten originär impermeablen Membran und ein Verfahren zur Herstellung der Membran. Die neue technische Lösung ist insbesondere geeignet zur gezielten Einschränkung des Transfers von Analyten in wässrigen Lösungen, Aerosolen und Dämpfen.

Eine Enzymelektrode mit Diffusionslimitierung ist in der Patentschrift DD 227 029 beschrieben. Bei dieser Elektrode, die zur Bestimmung von Glucose geeignet ist, wird anstelle der bekannten hydrophilen Trennmembran zwischen der Reaktionsschicht der Sandwich-Membran und der Blutprobe des Individuums eine gasdurchlässige, hydrophobe Membran angeordnet, die in definiertem Maße perforiert ist, wobei die Perforation exzentrisch über den Elektrodenanschlüssen angeordnet werden kann.
Die in der DD 227 029 beschriebene Lösung ist eingeschränkt nur für zylindersymmetrische Anordnungen geeignet, da konfektionierte Membransysteme eingesetzt und mechanisch fixiert werden. Diese Anordnung kann nicht auf plane Strukturen übertragen werden.

Aus der DE 195 47 923 A1 geht eine Membran für einen definierten Analyt-Transfer hervor, die in der für den Analyten originär impermeablen Membran ein variabel gestaltbares Fenster aufweist, das mittels eines Femtosekunden-Pulslasers in die Membran geschossen wird und das die Permeation von biochemischen Analyten in die Reaktionsschicht von Biosensoren limitiert.
Die in der DE 195 47 923 A1 beschriebene Lösung bezieht sich ausschließlich auf den Einsatz eines Lasers zur Realisierung eines Analytfensters Polymere adsorbieren die applizierte Energie unterschiedlich, wodurch Schädigungen an der Membran und des unter der perforierten Membran fixierten Enzyms hervorgerufen werden können. Die Zahl der zur Laserung geeigneten Materialien mit entsprechend geringer Energieaufnahme ist außerdem begrenzt. Gleichzeitig kommt es durch die geometrische Ausformung des Fokus zur Abtragung der Schichten (Enzym- und / oder Elektrolyt - Schicht) unter der hydrophoben Abdeckung.

Bekannt sind des weiteren Biosensoren, bei denen die zum vollständigen Umsatz des Analyten in der Reaktionsschicht notwendige Limitierung der Diffusion des zu detektierenden Analyten durch Membranen realisiert wird, die durch lonenbeschuss und anschließende Ätzvorgänge partiell permeabel für den Analyten gemacht werden (Glucose Biosensor for in vivo application. in: In vivo chemical sensors Hrsg.: S. J. Alcock, A. P. F. Turner, Cranfield Press, 1993).

Die Formierung einer Membran unter definierten Abdunstungsbedingungen nach Auftropfen entsprechender gelöster Polymere ist ebenfalls beschrieben (Abel et al. Biosensoren für Glucose - Anwendung in vivo. in: Sensor 95, Kongressband, Hrsg.: ACS Organisations GmbH 1995)

Membranen auf physiko-chemischen Signalwandlern mit statistisch verteilten Poren (geätzte oder durch Abdunstung gebildete) besitzen den Nachteil, dass sie der Reproduzierbarkeit der Permeationseigenschaften auf kleinen Flächen durch unterschiedliche Membranstruktur (Porenverteilung, Membranstärke) nicht genügen. Die statistischen Angaben der Membraneigenschaften beziehen sich jeweils auf Flächen von 1 m² und treffen keine Aussage über die Porenverteilung auf einzelnen kleinen Flächen, wie beispielsweise denen kleiner als 25 mm², wie sie bei Biosensoren allgemein üblich sind.

Bekannt ist aus der DE 196 28 052 C1, die ein Sensor- und/oder Trennelement betrifft, eine als einstöckig perforierte Stützmembran bezeichnete Schicht, auf der ein- oder beidseitig eine semipermeable Schicht zumindest in deren perforierten Bereich festhaftend angebracht ist. Die stützende Membran besteht aus einem mechanisch stabilen, membranbildenden anorganischen Material. Es ist gemäß der DE 196 28 052 C1 vorgesehen, die stützende Membran insbesondere aus Silizium, aus einer oder mehreren Siliziumverbindungen und/oder einem siliziumhaltigen Material zu fertigen, auf der unter Wahrung der mechanischen Stabilität der Membran mit bekannten Technologien, wie klassischer Photolithographie in Verbindung mit Ätzen oder durch Lasern, Perforationen erzeugt werden. Membranen mit derartigen Perforationen weisen jedoch die für eine gezielte Diffusion erforderlichen Eigenschaften nicht auf, da keine Einstellung eines definierten Diffussionsverhältnisses zweier Reaktanten ermöglicht wird..

Aufgabe der Erfindung ist es daher, eine verbesserte Membran mit einem variabel gestaltbaren Permeations-Analyt-Fenster mit derart modifizierten Permeationseigenschaften bereitzustellen, dass ein mit einer solchen Membran bedecktes Detektionselement eines physiko-chemischen oder biochemischen Signalwandlers die Konzentration eines Analyten, insbesondere von Wasserstoffperoxid, Glucose und Lactat, ohne vorherige Probenverdünnung direkt erfassen kann.

Aufgabe der Erfindung ist des weiteren die Bereitstellung eines Verfahrens zur Erzeugung eines Analyt-Fensters mit einer derartigen Permeationseigenschaft.

Erfindungsgemäß wird die Aufgabe durch eine Membran mit den Merkmalen des Anspruches 1 gelöst. Vorteilhafte Ausgestaltungen der erfindungsgemäßen Membran ergeben sich aus den Merkmalen der Ansprüche 2 bis 4.

Die Aufgabe zur Bereitstellung eines Verfahrens zur Erzeugung des genannten Analyt-Fensters wird durch das Verfahren mit den Merkmalen des Anspruches 5 gelöst. Bevorzugte Ausführungsformen des erfindungsgemäßen Verfahrens ergeben sich aus den Merkmalen der Ansprüche 6 bis 8.

Mit den Erfindungen verbindet sich überraschend der Vorzug, eine Membrananordnung realisieren zu können, die bei bisher unerreichter Reproduzierbarkeit ihrer Permeabilitätseigenschaften den Transfer von Analyten dahingehend beeinflusst, dass bei ihrer Anwendung auf physiko-chemischen und biochemischen Signalwandlern, insbesondere auf elektrochemischen Sensoren, auch bei hohen Analyt-Konzentrationen und ohne Probenverdünnung eine vollständige Umsetzung, insbesondere anodische Oxidation, der an das Detektionselement des physiko-chemischen Signalwandlers, insbesondere an die Anode eines elektrochemischen Sensors, gelangenden Analytmenge, gewährleistet ist. Auf diese Weise wird ein eindeutiger Zusammenhang von Analytmenge und Messsignal, vorzugsweise Sensorstrom, über einen weiten und variierbaren Konzentrationsbereich garantiert. Im besonderen eignet sich die erfindungsgemäße Membran für die elektrochemische Wasserstoffperoxid-Detektion durch anodische Oxidation mittels Chemosensoren sowie auch für den Einsatz auf Biosensoren zur Detektion biologischer Parameter, wie Glucose und Lactat.

Die wirksame Gesamtfläche des vorgesehenen Analyt-Fensters kann entsprechend den spezifischen Anforderungen an den Analyt-Transfer entweder durch dessen Größe oder durch die Summe der Flächen von Teilfenstern definiert erzeugt werden. Mit einem solchen Analyt-Fenster kann ein definierter und reproduzierbarer Analyt-Transfer an das eigentliche Detektionselement des physiko-chemischen oder biochemischen Signalwandlers, insbesondere die Anode eines elektrochemischen Sensors, garantiert werden.

Mit den erfindungsgemäßen Lösungen kann die an dem physiko-chemischen oder biochemischen Signalwandler tatsächlich pro Zeiteinheit umsetzbare Analytmenge im Verhältnis zu der maximal pro Zeiteinheit umsetzbaren Analytmenge begrenzt werden, wodurch insbesondere eine vorteilhafte Erweiterung des Meßbereiches des Signalwandlers erzielbar ist.

Im folgenden sollen die Erfindungen und deren weitere Vorzüge an Hand von Ausführungsbeispielen näher erläutert werden.

### Ausführungsbeispiel 1:

Bei Verwendung einer planen modifizierten elektrochemischen Clark-Elektrode (physiko-chemischer Sensor), bestehend aus einer Silber/Silberchlorid-Referenzelektrode (Katode) und einer Platin-Anode mit einer Anodenfläche von 0,1 mm² kann ohne Diffusionslimitierung eine elektrochemische Wasserstoffperoxid-Detektion mit einem linearen Meßbereich bis zu einer Maximalkonzentration von 3 mM (0,01 %) realisiert werden. Die Sensitivität eines solchen Sensors beträgt 200 ± 10 nA/mM.
Nach Abdeckung dieser Elektrodenanordnung mit dem drucktechnisch erzeugten Analytfester, z.B. aus Silicon von 0.01 mm², kann Wasserstoffperoxid bis zu einer Konzentration von 30 mmol/l (0,1 %) gemessen werden. Die Sensitivität beträgt dabei 60 nA/mM. Durch die hohe Reproduzierbarkeit des Druckbildes durch Siebe und Masken können diese Analytfenster auch in größeren Stückzahlen auf planaren Sensoren erzeugt werden.
Durch eine weitere Minimierung der Analytfensterfläche auf 0.005 mm² kann der lineare Messbereich auf 300 mM (1%) erweitert werden. Dabei gewährleistet die Membran, dass durch die hohe Analytkonzentration der Sensor chemisch nicht zerstört wird (Auflösen einer unbedeckten Silber/Silberchlorid - Elektrode). Für die Funktion dieses Sensors ist das Vorhandensein eines Verteilungsraumes mit elektrolytischen Eigenschaften Vorhaussetzung, da nur so eine Verteilung des Analyten über eine größere Elektrodenfläche gewährleistet werden kann. Dies wird bei dieser Ausführungsform mittels einer ionen- bzw. protonenleitenden Membran gewährleistet, die sich unter der die Analytdiffusion limitierenden Membran befindet. Dieser Sensor kann zur direkten Bestimmung der Wasserstoffperoxidkonzentration in Bleichlösungen eingesetzt werden.

### Ausführungsbeispiel 2:

Ein unbedeckter enzymatisch amperometrischer Biosensor (z.B. für Glucose und Lactat) kann bis zu einer Analytkonzentration von ca. 2 mM linear messen. Bei höheren Konzentrationen führen entweder die Aktivität des auf dem Sensor immobilisierten Enzyms oder ein eingeschränkter Zutritt des Koreaktanten Sauerstoff zu Limitierungen, so dass das Messsignal nicht mehr ausschließlich von der Analytkonzentration abhängt.
Wird ein solcher Sensor mit einer wie im Ausführungsbeispiel 1 beschriebenen hydrophoben, sauerstoffdurchlässigen Membran mit einem Fenster von 0,01 mm² bedruckt, wird eine lineare Messung bis 50 mM ermöglicht, gleichzeitig nimmt die Sensitivität [nA/mM] entsprechend ab. Der Verteilungsraum unter der hydrophoben Abdeckung ist durch das immobilisierte Enzym gewährleistet.

### Ausführungsbeispiel 3 - Verfahrensablauf Dickschichtdruck (Masken oder Siebdruck):

Eingesetzt werden plane modifizierte elektrochemische Clark-Elektroden (physiko-chemischer Sensor), bestehend aus einer Silber/Silberchlorid-Referenzelektrode (Katode) und einer Platin-Anode auf einem Al₂O₃ - Keramiksubstrat. Auf diesen Elektroden wird z.B. eine protonenleitende Membran aus Nafion® (Hersteller: Du Pont) durch Tropfen (0,5 µl) generiert. Auf dem so vorbehandelten Sensor wird mittels klassischer Dickschichttechnik eine hydrophobe Abdeckung aus Silicon gedruckt. Erforderlich ist dazu ein Dickschichtsieb bzw. eine Schablone, auf dem sich das Negativ des Druckbildes befindet. Die geeignete Maschenzahl des Siebes ist dabei abhängig von den Eigenschaften des zu druckenden Polymers (300 Mesh, 30°) und wird teilweise von den Herstellern der Druckpasten empfohlen. Die Schichtdicke des Polymers auf dem Sensor wird durch die Schichtdicke der Maske (z.B. 30µm) auf dem Sieb bzw. der Schablonendicke bestimmt. Die Variationsmöglichkeiten der Schichtdicke sind von der Siebfertigungstechnologie abhängig. Die Grenzen werden von den unterschiedlichen Anbietem jeweils vorgegeben. Mittels eines Siebdruckers wird das zu druckende Polymer als Paste mit thixotropen Eigenschaften durch das Sieb (oder die Schablone) auf die Sensoren übertragen. In Abhängigkeit von den Polymereigenschaften werden die Dickschichtdruckparameter, wie der Absprung, der Andruck (Kraft des Rakels) und die Druckgeschwindigkeit, eingestellt. Die so auf dem Sensor generierten Druckbilder werden getrocknet bzw. polymerisiert. Beim Einsatz der Siliconpaste läuft die Polymerisation bei Vorhandensein von Luftfeuchte und Sauerstoff selbstständig ab. Andere Polymerisationsvorgänge müssen durch Energiezufuhr, z.B. durch Temperaturerhöhung, UV- Strahlung, ausgelöst werden.

### Ausführungsbeispiel 4 - Verfahrensablauf Photolithographie:

Der photolithographische Prozess ist analog der Belichtung von Leiterplatten gestaltet, mit dem Unterschied, dass die eingesetzten photosensitiven Polymere möglichst wenig Zusatzstoffe enthalten.
Es werden zunächst alle Schichten in der erforderlichen Reihenfolge aufgetragen, die für die Funktion des späteren Sensors relevant sind, wie z.B. Enzymschicht(en) und/oder ionen- oder protonenleitende Schichten. Nach Aushärtung dieser Schichten wird der photoempfindliche Lack per Tauchen aufgetragen. Danach erfolgt die Belichtung mittels eines UV-Belichters durch eine Photomaske. In den belichteten Bereichen erfolgt die Polymerisation, da nur dort die notwendige Energie für die Polymerisation appliziert wird. Das Monomer kann anschließend ausgewaschen werden (Positiv-Verfahren). Analoge Vorgänge können auch im Negativ-Verfahren realisiert werden. Dabei wird das photosensitive Polymer (Lackgrundstoff) aufgetragen und polymerisiert. Anschließend werden die Analytfensterbereiche mittels UV-Licht über eine Blende auf dem Polymer belichtet, dabei werden die Polymerstrukturen im belichteten Bereich zerstört und können anschließend ausgewaschen werden.

Anwendungsgebiete für die Membran mit dem erfindungsgemäß variabel gestaltbaren Analytfenster sind alle Bereiche, in denen vor Ort Messungen physiko-chemisch und biochemisch erfassbarer Analyte, insbesondere in hoher Konzentration und in unverdünnten Probemedien, direkt punktuell und/oder kontinuierlich durchgeführt werden müssen. Diese Anforderung besteht insbesondere für die Messung von Wasserstoffperoxid im Bereich der Desinfektion und Sterilisation in medizinischen Einrichtungen, bei chemischen Syntheseprozessen, beim Bleichen, zur Desinfektion von Verpackungen für Nahrungsgüter und Getränke.

## Patentansprüche

1. Membran zur Bedeckung von Detektionselementen physiko-chemischer und biochemischer Signalwandler mit einem variabel gestaltbaren Permeations-Analyt-Fenster in einer für einen Analyten originär impermeablen Membran bestehend aus einem Polymer, **dadurch gekennzeichnet, dass**
- das Permeations-Analyt-Fenster in der Membran drucktechnisch, elektronenlithographisch, photolithographisch oder röntgenlithographisch erzeugt ist,
- das Permeations-Analyt-Fenster zeitlich während der Ausbildung der impermeablen Membran oder in vorgefertigte Membranfolien oder in die Membran bildende Materialien eingebracht ist, die bereits vor der Erzeugung des Permeations-Analyt-Fensters auf dem physiko-chemischen Signalwandler durch Polymerisation formiert sind,
- unter der Membran zur Unterstützung der Analytdiffusion und der Analytumsetzung eine aus einem hydrophilen oder ionen- oder protonenleitenden Polymer bestehende Schicht angeordnet ist und
- das Permeations-Analyt-Fenster in der für den Analyten impermeablen Membran mit einer für den Analyten permeablen Schutzmembran abgedeckt ist.

2. Membran nach Anspruch 1, **dadurch gekennzeichnet, dass das** Polymermaterial der Membran Novolake, eine Expoxyverbindung, ein Polymethacrylat, ein Polyurethan-, Polycarbonat- oder Celluloseacetatmaterial oder regenerierte Cellulose ist.

3. Membran nach Anspruch 1 oder 2, **dadurch gekennzeichnet, dass** die zur Unterstützung der Analytdiffusion und der -umsetzung unter der Membran angeordnete Schicht leitend Anode und Kathode verbindet und das Polymer dieser Schicht, vorzugsweise ein Polyacrylat, besonders bevorzugt ein Methacrylsäureester - Copolymerisat oder Nafion, ist.

4. Membran nach einem der Ansprüch 1 bis 3, **dadurch gekennzeichnet, dass** die die Analytdiffusion und -umsetzung unterstützende Schicht mit einem oder mehreren anorganischen Elektrolytsalzen, vorzugsweise mit einem Elektrolytsalz mit hygroskopischen Eigenschaften oder mit einem oder mehreren Feuchthaltemitteln, vorzugsweise mit einem Polyol, versetzt ist.

5. Verfahren zur Erzeugung eines variabel gestaltbaren Permeations-Analyt-Fenster in einer für einen Analyten originär impermeablen Membran aus einem Polymer, die der Bedeckung von Detektionselementen physiko-chemischer und biochemischer Signalwandler dient, **dadurch gekennzeichnet, dass** das Permeations-Analyt-Fenster in der Membran drucktechnisch, elektronenlithographisch, photolithographisch oder röntgenlithographisch zeitlich während der Ausbildung der impermeablen Membran oder in Membranfolien oder in die Membran bildenden Materialien erzeugt wird, die bereits vor der Erzeugung des Permeations-Analyt-Fensters auf dem physiko-chemischen Signalwandler durch Polymerisation formiert wurden, unter der Membran zur Unterstützung der Analytdiffusion und - umsetzung eine aus einem hydrophilen oder ionen- oder protonenleitenden Polymer bestehende Schicht angeordnet ist und das erzeugte Permeations-Analyt-Fenster anschließend mit einer für den Analyten permeablen Schutzmembran abgedeckt wird.

6. Verfahren nach Anspruch 5, **dadurch gekennzeichnet, dass** als Polymermaterial, vorzugsweise Novolake, eine Expoxyverbindung, ein Polymethacrylate, ein Polyurethan-, Polycarbonat- oder Celluloseacetatmaterial oder regenerierte Cellulose eingesetzt wird.

7. Verfahren nach Anspruch 5 oder 6, **dadurch gekennzeichnet, dass** durch die zur Unterstützung der Analytdiffusion und der -umsetzung unter der Membran angeordnete Schicht Anode und Kathode leitend verbunden werden als Polymer dieser Schicht, vorzugsweise ein Polyacrylat, besonders bevorzugt ein Methacrylsäureester - Copolymerisat oder Nafion, eingesetzt wird.

8. Verfahren nach einem der Ansprüche 5 bis 7, **dadurch gekennzeichnet, dass** die zur Unterstützung der Analytdiffusion und der -umsetzung unter der Membran angeordnete Schicht mit einem oder mehreren anorganischen Elektrolytsalzen, vorzugsweise mit einem Elektrolytsalz mit hygroskopischen Eigenschaften oder mit einem oder mehreren Feuchthaltemitteln, vorzugsweise mit einem Polyol, versetzt wird.

## Claims

1. Membrane for covering detection elements of physico-chemical and biochemical signal converters with a variably configurable permeation analyte window that is originally impermeable to an analyte, comprised of a polymer, **characterized by**
- the permeation analyte window is produced in the membrane by printing, electronic lithographically, photo-lithographically or x-ray-lithographically,
- the permeation analyte window is inserted during the formation of the impermeable membrane or in the prefabricated membrane or in the membrane-forming materials which are already formed prior to the production of the permeation analyte window on the physico-chemical signal converter by polymerization,
- a layer made of a hydrophilic or ionic or proto-conducting polymer is placed under the membrane for the support of the analyte diffusion and the analyte realization and
- the permeation analyte window in the membrane that is impermeable for the analytes is covered with a protective membrane permeable for the analytes.

2. Membrane in accordance with claim 1, **characterized by** the polymer material of the membrane being novolake, an epoxy compound, a polymethacrylate, a polyurethane, polycarbonate or cellulose-acetate material or regenerative cellulose.

3. Membrane in accordance with claims 1 or 2, **characterized by** the layer for the support of the analyte diffusion and the analyte realization under the membrane combines conducting anodes and cathodes and the polymer of this layer, preferably a polyacrylate, especially prefers a methacryl acidic ester -copolymerisate or naf ion.

4. Membrane in accordance with one of the claims 1 to 3, **characterized by** the analyte diffusion and realization supporting layer is combined with one or more inorganic electrolytic salts, preferably with an electrolytic salt with hygroscopic properties or with one or more moisture-retaining media, preferably with a polyol.

5. Process for producing a variably configurable permeation analyte window in a membrane originally impermeable for an analyte, comprised of a polymer that serves to cover detection elements of physico-chemical and bio-chemical signal converters, **characterized by** the permeation analyte window being produced in the membrane by printing, electronic lithographically, photo-lithographically or x-ray-lithographically during the formation of the impermeable membrane or in membrane foils or in the membrane forming materials which were already formed prior to the production of the permeation analyte window on the physico-chemical signal converter by means of polymerization, with a layer made of a hydrophilic or ionic or proto-conducting polymer placed under the membrane for the support of the analyte diffusion and the analyte realization and the permeation analyte window is then covered with a protective membrane that is permeable for the analytes.

6. Process in accordance with claim 5, **characterized by** the polymer material of the membrane being A novolake, an epoxy compound, a polymethacrylate, a polyurethane, polycarbonate or cellulose-acetate material or regenerative cellulose.

7. Process in accordance with claim 5 or 6, **characterized by** the layer for the support of the analyte diffusion and the analyte realization under the membrane combines conducting anodes and cathodes and the polymer of this layer, preferably a polyacrylate, especially prefers a methacryl acidic ester -copolymerisate or naf ion.

8. Process in accordance with one of claims 5 to 7, **characterized by** the analyte diffusion and realization supporting layer being combined with one or more inorganic electrolytic salts, preferably with an electrolytic salt with hygroscopic properties or with one or more moisture-retaining media, preferably with a polyol.

## Revendications

1. Membrane destinée à recouvrir les éléments de détection de convertisseurs de signaux physico-chimiques et biochimiques à l'aide d'une fenêtre de perméation à un analyte à configuration variable située à l'intérieur d'une membrane qui est, à l'origine, imperméable à un analyte et qui est composée d'un polymère, **caractérisée en ce que**
- la fenêtre est réalisée à l'intérieur de la membrane par impression, lithographie par électrons, photolithographie ou lithographie par rayons X,
- la fenêtre est placée en même temps que la formation de la membrane imperméable ou à l'intérieur de membranes pelliculaires préfabriquées ou à l'intérieur de matériaux formant la membrane qui ont déjà été formés par polymérisation sur le convertisseur de signaux physico-chimiques avant la réalisation de la fenêtre de perméation à l'analyte,
- une couche composée d'un polymère hydrophile ou conducteur d'ions ou de protons est disposée sous la membrane afin d'assister la diffusion et le déplacement de l'analyte et
- la fenêtre de perméation à l'analyte est recouverte à l'intérieur de la membrane imperméable à l'analyte d'une membrane de protection perméable à l'analyte.

2. Membrane selon la revendication 1, **caractérisée en ce que** le matériau polymérique se compose de novolaques, composés époxy, polyméthacrylates, matériaux polyuréthanes, polycarbonates ou d'acétate de cellulose ou de cellulose régénérée.

3. Membrane selon la revendication 1 ou 2, **caractérisée en ce que** la couche disposée sous la membrane destinée à assister la diffusion et le déplacement de l'analyte relie de façon conductrice l'anode et la cathode et le polymère de cette couche, de préférence un polyacrylate, sera composé de préférence d'un copolymérisat d'ester d'acide méthacrylique ou de Nafion.

4. Membrane selon l'une quelconque des revendications 1 à 3, **caractérisée en ce que** la couche assistant la diffusion et le déplacement de l'analyte est mélangée à un ou plusieurs sels électrolytiques inorganiques, de préférence à un sel électrolytique aux propriétés hygroscopiques ou à un ou plusieurs agents humidificateurs, de préférence un polyol.

5. Procédé pour la réalisation d'une fenêtre de perméation à un analyte de configuration variable située à l'intérieur d'une membrane qui est, à l'origine, imperméable à un analyte, est composée d'un polymère et sert à recouvrir les éléments de détection de convertisseurs de signaux physico-chimiques et biochimiques, **caractérisé en ce que** la fenêtre de perméation à un analyte située à l'intérieur de la membrane est réalisée, par impression, lithographie par électrons, photolithographie ou lithographie par rayons X, en même temps que la formation de la membrane imperméable ou à l'intérieur de membranes pelliculaires ou à l'intérieur de matériaux formant la membrane qui ont déjà été formés par polymérisation sur le convertisseur de signaux physico-chimiques avant la réalisation de la fenêtre de perméation à l'analyte, qu'une couche composée d'un polymère hydrophile ou conducteur d'ions ou de protons est disposée sous la membrane afin d'assister la diffusion et le déplacement de l'analyte et que, pour finir, la fenêtre de perméation à un analyte est recouverte d'une membrane de protection perméable à l'analyte.

6. Procédé selon la revendication 5, **caractérisé en ce que** le matériau polymérique utilisé se compose de novolaques, composés époxy, polyméthacrylates, matériaux polyuréthanes, polycarbonates ou d'acétate de cellulose ou de cellulose régénérée.

7. Procédé selon la revendication 5 ou 6, **caractérisé en ce que** la couche disposée sous la membrane destinée à assister la diffusion et le déplacement de l'analyte relie de façon conductrice l'anode et la cathode et le polymère de cette couche utilisé, de préférence un polyacrylate, sera composé de préférence d'un copolymérisat d'ester d'acide méthacrylique ou de Nafion.

8. Procédé selon l'une quelconque des revendications 5 à 7, **caractérisé en ce que** la couche disposée sous la membrane destinée à assister la diffusion et le déplacement de l'analyte est mélangée à un ou plusieurs sels électrolytiques inorganiques, de préférence à un sel électrolytique aux propriétés hygroscopiques ou à un ou plusieurs agents humidificateurs, de préférence un polyol.
